Europäisches Patentamt

European Patent Office

Office européen des brevets

(11) Publication number: **0 402 766**
**A1**

## (12) EUROPEAN PATENT APPLICATION

(21) Application number: **90110779.7**

(22) Date of filing: **07.06.90**

(51) Int. Cl.5: **F16M 5/00, F25D 23/10**

(30) Priority: **12.06.89 IT 3067089 U**

(43) Date of publication of application:
**19.12.90 Bulletin 90/51**

(84) Designated Contracting States:
**DE ES FR GB**

(71) Applicant: **INDUSTRIE THERMOINOX S.P.A.**
**Via Ospitale, 3**
**I-35010 Carmignano di Brenta (Province of Padova)(IT)**

(72) Inventor: **Valente, Domenico**
**Via Tintoretto No. 36/38**
**I-36100 Vicenza(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Supporting bracket for flush-mounting electrical household appliances.**

(57) The bracket (1) comprises a frame (2) defining a resting plane (3), having an inner edge (4) and an outer edge (5) extending orthogonally thereto. A portion (6) extends from the inner edge (4), and a raised drawn member is provided between the plane (3) and the outer edge (5) for collecting moisture. Depressions (8,9) having holes (10) formed therein are provided at the corners of the frame (2). Elements (11) are located below the holes (10) and each have a base (12), having an elongate hole (16) formed therein and vertical wings (13,14,15). The element (11) is connected to the frame (2) via screw associated with ground resting members and engaging the hole (10) and the elongate hole (16), in such a position that the base (12) of each element (11) protrudes from below the frame (2) for supporting lateral covering panels.

Fig.1

EP 0 402 766 A1

# SUPPORTING BRACKET FOR FLUSH-MOUNTING ELECTRICAL HOUSEHOLD APPLIANCES

The present invention relates to a supporting bracket for flush-mounting electrical household appliances.

It is known that in current modular kitchens the refrigeration appliances are covered by panels made of a material which is identical to the material of the rest of the furniture, and are downwardly supported by a base with ground resting feet.

The base is usually constituted by a panel made of wood or laminboard which causes several problems during its use since it completely closes the lower part of the appliance.

These disadvantages derive in particular from the fact that condensation or leaks and consequent spillage can occur on the sides of the appliance and fall by gravity onto the base, which being made of wood or laminboard, as mentioned, absorbs the moisture and swells in more or less extensive regions or indeed throughout.

An increase in the thickness of the wood naturally causes tensions to form in the entire covering structure, with the consequent occurrence of breakage, cracking, and/or warping and twisting thereof.

It is also known that a conventional electrical household appliance requires, in order to operate correctly, a certain downward "breathing space" for its mechanical components, such as in the case of refrigerators, which produce a certain amount of heat to be dissipated in order to cool the chamber used for preserving food.

The wood or laminboard base currently occludes the entire lower portion of the appliance and allows no outlet for the heat produced by the mechanical and/or electric components.

In order to solve the above described disadvantages, supporting brackets have been provided which are made of sheet metal and are constituted by sheet metal profiled elements, which are substantially bent in the shape of an inverted U and are welded together to form a rectangular frame.

Though such brackets are made of a material which does not absorb liquids, said brackets have been found to be unsuitable for being manufactured industrially at competitive prices due to their greater productive complexity which makes them unsuitable for large-scale production.

The aim of the present invention is to provide a supporting bracket for electrical household appliances which, by eliminating the disadvantages described above in known types, is extremely advantageous from an economical standpoint and provides a bracket which can be sold at a competitive price.

A consequent primary object is to provide a supporting bracket which can be manufactured on a large-scale production basis.

Another important object is to provide a supporting bracket which is interchangeable with those which exist in known flush-mounting appliances.

Still another object is to provide a supporting bracket which has good mechanical resistance and cannot be deformed by the stresses to which it is subjected, and which can be manufactured by employing readily avalaible materials, plant and equipment.

This aim, these objects and others which will become apparent hereinafter are achieved by a supporting bracket for flush-mounting electrical household appliances, characterized in that it comprises an element made of sheet metal which is blanked, stamped and bent so as to form a rectangular frame with a resting plane and stiffening edges which are orthogonal thereto, said frame having at least one upper perimetric drop-collecting drawn member, and elements applicable below said drawing for supporting and fixing ground resting members and lateral covering panels.

Further characteristics and advantages of the invention will become apparent from the detailed description of an embodiment thereof, illustrated only by way of non-limitative example in the accompanying drawings, wherein:

figure 1 is a perspective top view of the supporting bracket according to the invention;

figure 2 is a transverse sectional view taken along a median plane of the bracket of figure 1;

figure 3 is an enlarged sectional detail view of one of the regions of the bracket of figure 1 with which the elements and supports for the fixing of ground resting feet and lateral covering panels are associated.

With reference to the previously described figures, a supporting bracket for flush-mounting electrical houselhod appliances is generally indicated by the reference numeral 1 and is constituted by an element preferably made of sheet metal which is blanked, stamped and bent so as to form a rectangular frame indicated by 2.

As can be seen in the figures, the frame 2 has a resting plane 3 to which an inner edge 4 and an outer stiffening edge 5 are orthogonally connected and extend downwardly.

It should be noted that the inner edge 4 is rigidly associated with a portion 6 which is orthogonal thereto and is therefore parallel to the plane 3, whereas a perimetric member expediently constituted by a raised drawn member 7, with a drop-collecting function, is provided between said plane 3 and the outer edge 5.

Said plane 3 has, on corner positions which are adjacent to the two sides of the frame 2, at identical distances from the edges, two pairs of substantially oval depressions, respectively 8 and 9, each of which is provided with a hole 10 in an appropriate position.

An element 11, again advantageously made of blanked or sheared, stamped and bent sheet metal, can be arranged below each depression 8 and 9 and is essentially constituted by a planar rectangular base 12 from which respective wings 13, 14 and 15 extend vertically on three sides.

The two parallel wings 14 and 15, which are orthogonal with respect to the corresponding outer edge 5, do not extend along the entire length of the base 12 so that they can be placed inside the frame 2, causing a portion of the base 12 to protrude laterally.

Each element 11 is advantageously fixed to the frame 2 by means of a screw 30 associated with a conventional ground resting member or foot 31 which passes through an elongate or slot-like hole 16 in the element 11 and is screwed in a corresponding hole 10 inside a depression 8 or 9. Obviously, the foot 31 may have any suitable configuration according to the contingent requirements, and the screw 30 may be associated with the foot 31 in any convenient manner or formed monolithically therewith.

The positions of the holes 10 can be different, but the element 11 must be positioned keeping the free part of the base 12 protruding from the frame 2.

The holes 16 are slotted to avoid the problems which would arise in case of axial offset between them and the holes 10.

The protruding parts of the bases 12 are adapted for supporting the lateral covering panels of the refrigerator or other domestic appliance, which can be conveniently fixed to the structure by means of screws adapted to engage in holes 17 provided on the outer edge 5.

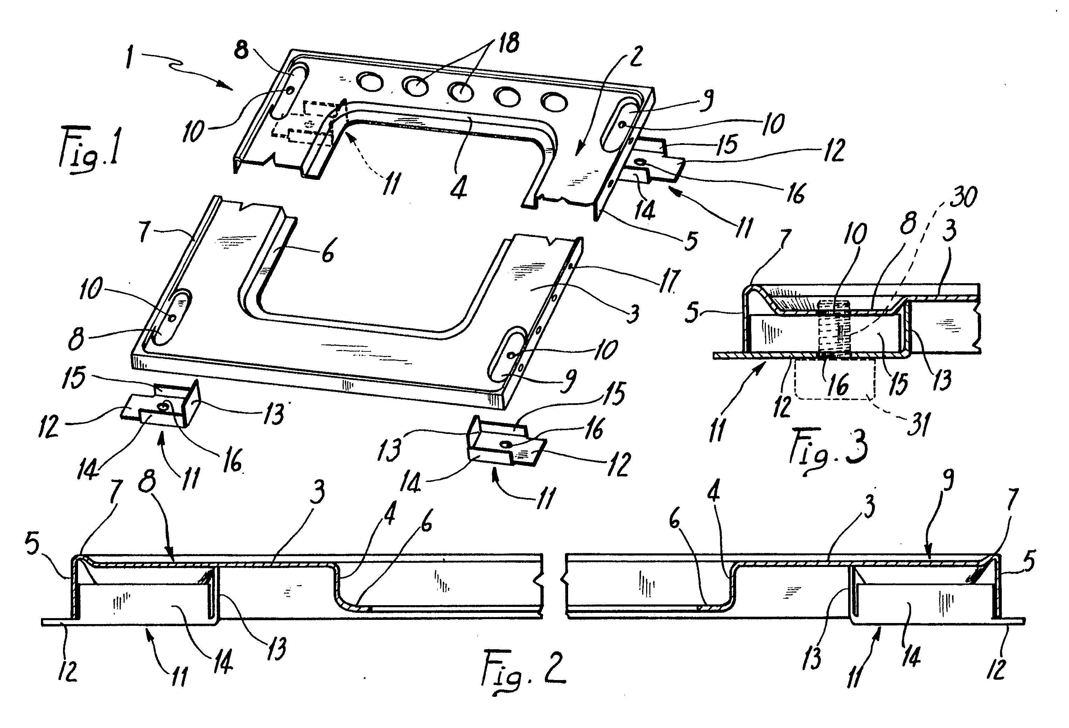

As can be seen in figure 1, wide ventilation holes 18 for the electric mechanical elements of the appliance are provided in the rear part of the frame on the plane 3.

Advantageously, the lateral wings 14,15 have a shorter vertical extension from the base 12 than the end wing 13, such that when wings 14,15 engage underside of plane 3, the end wing 13 is positioned behind the downwardly protruding recess 8. In this way the element 11 cannot become accidentally displaced, even when screw 30 is not fully tightened.

From what has been described above, the intended aim and objects are therefore achieved, a supporting bracket having been provided which can be obtained almost entirely by blanking, stamping and bending sheet metal and is therefore such as to combine characteristics of unalterability in the course of time and of good mechanical resistance and characteristics of constructive simplicity and producibility at low cost.

It should be noted that the bracket is also provided with a perimetric drawn member for drop-collecting which does not allow any outward overflow.

The preferred material is galvanized and pre-painted sheet steel, but any other metallic material with characteristics of hygiene, unalterability in the course of time and of good mechanical resistance may be suitable.

In practice the dimensions may be any according to the requirements.

Where technical features mentioned in any claim are followed by reference signs, those reference signs have been included for the sole purpose of increasing the intelligibility of the claims and accordingly, such reference signs do not have any limiting affect on the scope of each element identified by way of example by such reference signs.

## Claims

1. Supporting bracket for flush-mounting electrical household appliances, characterized in that it comprises an element made of blanked, stamped and bent sheet metal so as to form a rectangular frame having a resting plane, and stiffening edges which are orthogonal thereto, said frame having at least one upper perimetric drop-collecting member, and elements applicable below said frame for supporting and fixing ground resting members and lateral covering panels.

2. Bracket according to claim 1, characterized in that said stiffening edges extend inside and outside said frame.

3. Bracket according to claims 1 and 2, characterized in that said inner stiffening edge extends with a portion which is orthogonal thereto and is therefore parallel to said resting plane.

4. Bracket according to one or more of the preceding claims, characterized in that said perimetric upper drawing is arranged between said plane and the outer edge which is orthogonal thereto.

5. Supporting bracket according to one or more of the preceding claims, characterized in that said elements for supporting and fixing ground resting feet comprise pairs of depressions provided on said resting plane in a position which is adjacent to the lateral edges of the frame and at the same distance therefrom, each depression, which is substantially oval, having internal holes.

6. Bracket according to one or more of the preceding claims, characterized in that said elements for supporting and fixing ground resting feet and lateral panels can comprise an element which can be applied below each of said depressions, said element, made of blanked, stamped and bent sheet metal, comprising a planar rectangular base from which respective wings extend orthogonally on three sides, two parallel wings not affecting all the length of said base, said element, when arranged with said wings inside the structure of said frame, having a part of base which protrudes therefrom.

7. Bracket according to claim 6, characterized in that said element arranged below each of said depressions has, on said base, a slotted hole which corresponds to said hole provided on each depression, the screw of a resting foot being screwable in said holes.

8. Bracket according to one or more of the preceding claims, characterized in that the portions of the bases of said elements which can be fixed to said frame constitute rests for lateral covering panels, said panels being fixed to the structure with screws adapted to engage in corresponding holes provided on the outer edges of said frame.

Fig.1

Fig.2

Fig.3

EP 0 402 766 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 159 247 (BOOM) <br> * Page 1, left-hand column, line 41 - right-hand column, line 42; figures 1-5 * | 1,2,4 | F 16 M 5/00 <br> F 25 D 23/10 |
| X | US-A-2 916 233 (ECKER) <br> * Column 1, lines 20-45; figures 1-3 * | 1,2,4 | |
| X | FR-A-2 531 195 (PHILIPS) <br> * Page 2, lines 17-35; figure 1 * | 1 | |
| A | GB-A-2 104 645 (T.I. DOMESTIC APPLIANCES) <br> * Page 2, lines 66-77; figure * | 1 | |
| A | EP-A-0 043 791 (TERRAILLON) | | |
| A | US-A-2 986 900 (CROTSER) | | |
| | | | TECHNICAL FIELDS SEARCHED (Int. Cl.5) <br><br> F 16 M <br> F 25 D <br> D 06 F <br> A 47 L <br> F 24 C |

The present search report has been drawn up for all claims

| Place of search | Date of completion of the search | Examiner |
|---|---|---|
| THE HAGUE | 19-09-1990 | BARON C. |